(19) Europäisches Patentamt
European Patent Office
Office européen des brevets

(11) Veröffentlichungsnummer: **0 095 730**
**A2**

(12) # EUROPÄISCHE PATENTANMELDUNG

(21) Anmeldenummer: **83105199.0**

(22) Anmeldetag: **26.05.83**

(51) Int. Cl.³: **C 08 F 220/56,** C 08 F 226/02, C 08 F 220/58, E 21 B 43/22, C 10 G 1/00, C 08 F 2/32 // (C08F220/56, 226/02, 220/58), (C08F226/02, 220/56, 220/58), (C08F220/58, 220/56, 226/02)

(30) Priorität: **01.06.82 DE 3220503**

(43) Veröffentlichungstag der Anmeldung: **07.12.83**
**Patentblatt 83/49**

(84) Benannte Vertragsstaaten: **CH DE FR GB IT LI SE**

(71) Anmelder: **CASSELLA Aktiengesellschaft, Hanauer Landstrasse 526, D-6000 Frankfurt am Main 61 (DE)**

(72) Erfinder: **Engelhardt, Friedrich, Dr., Hünfelder Strasse 20, D-6000 Frankfurt/Main 61 (DE)**
Erfinder: **Greiner, Ulrich, Dr., Nidderauerstrasse 13, D-6369 Schöneck 1 (DE)**
Erfinder: **Schmitz, Hermann, Dr., Marbachweg 313, D-6000 Frankfurt/Main 1 (DE)**
Erfinder: **Gulden, Walter, Dr., Frankfurter Strasse 70, D-6238 Hofheim/Ts. (DE)**
Erfinder: **von Halasz, Sigmar-Peter, Dr., Die Ritterwiesen 1 c, D-6237 Liederbach (DE)**

(74) Vertreter: **Urbach, Hans-Georg, Dr., Hanauer Landstrasse 526, D-6000 Frankfurt am Main 61 (DE)**

(54) **Hochmolekulare wasserlösliche Copolymerisate, ihre Herstellung und Verwendung.**

(57) Wasserlösliche Copolymerisate, die in statistischer Verteilung zu 5 bis 60 Gewichtsprozent aus Resten der Formel I

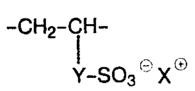 (I)

2 bis 40 Gew.% aus Resten der Formel II

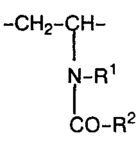 (II)

und 38 bis 93 Gew.% aus Resten der Formel III

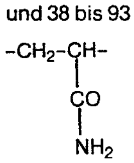

bestehen, sowie deren durch Partialhydrolyse erhältliche Derivate, wobei $R^1$ und $R^2$ gleich oder verschieden sind und Wasserstoff, Methyl, Ethyl oder gegebenenfalls zusammen auch Trimethylen, Y den Rest $-CO-NH-C(CH_3)_2-CH_2-$ oder eine direkte Bindung und $X^{\oplus}$ ein Kation bedeuten, werden hergestellt durch inverse Emulsionspolymerisation. Die erhaltenen Copolymerisatemulsionen können mit besonderem Vorteil als Hilfsmittel beim Entölen von mineralölhaltigen Sand- und Gesteinsmassen verwendet werden.

EP 0 095 730 A2

Dr.Va/St
Ref. 3249

# Hochmolekulare wasserlösliche Copolymerisate, ihre Herstellung und Verwendung

Die vorliegende Erfindung betrifft wasserlösliche Copolymerisate, die in statistischer Verteilung zu 5 bis 60 Gewichtsprozent aus Resten der Formel I

$$-CH_2-CH- \quad | \quad Y-SO_3^{\ominus}X^{\oplus} \qquad (I)$$

2 bis 40 Gew.% aus Resten der Formel II

$$-CH_2-CH- \quad | \quad N-R^1 \quad | \quad CO-R^2 \qquad (II)$$

und 38 bis 93 Gew.% aus Resten der Formel III

$$-CH_2-CH- \quad | \quad CO \quad | \quad NH_2 \qquad (III)$$

bestehen, sowie deren durch Partialhydrolyse erhältliche Derivate, wobei $R^1$ und $R^2$ gleich oder verschieden sind und Wasserstoff, Methyl, Ethyl oder gegebenenfalls zusammen auch Trimethylen, Y den Rest $-CO-NH-C(CH_3)_2-CH_2-$ oder eine direkte Bindung und $X^{\oplus}$ ein Kation bedeuten, ihre Herstellung durch inverse Emulsionspolymerisation und ihre Verwendung als Hilfsmittel beim Entölen von mineralölhaltigen Sand- und Gesteinsmassen.

Ein aktuelles technisches Problem ist die Entölung von mineralölhaltigen Sand- und Gesteinsmassen. Mineralölhaltige Sand- und Gesteinsmassen liegen in Erdöllagerstätten vor und halten normalerweise das darin enthaltene Mineralöl hartnäckig zurück.

Es ist daher verschiedentlich beschrieben worden, mineralölhaltige Sand- und Gesteinsmassen mit Wasser durchzuspülen, um das Mineralöl mechanisch auszutreiben.

Dieses Verfahren gestattet es jedoch nicht, das gesamte in den Massen enthaltene Mineralöl auszutreiben. Der weitaus größte Teil bleibt vielmehr haften, weil das Wasser nicht die Haftkräfte zwischen Öl und Stein und die Kapillarkräfte, allgemein die sogenannten Rückhaltkräfte, überwinden kann und sich Kanäle schafft, durch die es wirkungslos abfließt. Ein wesentlicher Grund dafür sind die unterschiedlichen Grenzflächenspannungen zwischen Sand bzw. Gestein und Öl einerseits und Wasser andererseits und die häufig sehr großen Viskositätsdifferenzen zwischen Öl und Wasser. Beim Wasserfluten von Erdöllagerstätten ist daher bereits versucht worden, oberflächenaktive Mittel, wie z.B. Alkansulfonate und/oder Verdicker auf Basis von wasserlöslichen Polymerisaten oder von Polysaccharidderivaten als Hilfsmittel einzusetzen (sog. chemisches Fluten, Tertiärförderung).

Es hat sich jedoch gezeigt, daß an derartige chemische Mittel über die Tensid- bzw. Verdickerwirkung hinaus so vielfältige, hohe Anforderungen gestellt werden, daß die bisher verwendeten Produkte noch sehr viel zu wünschen übrig lassen. Ein besonderer Nachteil der bisher bekannten Hilfsmittel besteht darin, daß sie ihre Wirksamkeit in Gegenwart von Elektrolyten weitgehend verlieren. Der Einsatz des unbegrenzt zur Verfügung stehenden Meerwassers für das Fluten von mineralölhaltigen Formationen ist damit ausgeschlossen. Es ist daher von einem Entölungshilfsmittel zu fordern, daß es auch in Gegenwart von Elektrolyten wirksam ist, eine Forderung, die für die Entölung von Erdölfeldern offshore von besonders großer Wichtigkeit ist.

Wie Modellversuche zeigen, bei denen mineralölhaltige Sand- oder Gesteinspackungen entölt werden und die durch die Praxis bestätigt werden, kommt es noch wesentlich darauf an, daß die Spülflüssigkeit eine gute Injizierbarkeit aufweist, d.h., daß sich die Durchströmung poröser Materialien nach der Zeit möglichst wenig ändert und daß sie auch bei verschiedenen Schergefällen ein optimales rheologisches Verhalten aufweist.

Beim Einsatz der Entölungshilfsmittel auf dem Gebiet der Erdölförderung ist es erforderlich, daß die Produkte auch bei den hohen Lagerstättentemperaturen lange Zeit beständig und wirksam sind, die Lagerstätte nicht schädigen und auch in Gegenwart hoher Elektrolytkonzentration wirken. Die bisher z.B. aus der US-PS 2 775 557 und den DE-PS 13 00 481 und 24 44 108 bekannten und als Verdicker wirkenden Polymere erfüllen gerade in Bezug auf Elektrolytverträglichkeit und auf Thermostabilität noch nicht die Erfordernisse der Praxis.

Aus der europäischen Patentanmeldung 44 508 ist es bekannt, daß man diese Nachteile beim Entölen mineralölhaltiger Sand- und Gesteinsmassen dadurch beseitigen oder erheblich vermindern kann, daß man dem Spülwasser 20 bis 5000 ppm eines wasserlöslichen Copolymerisats zusetzt, das in statistischer Verteilung zu 5 bis 60 Gewichtsprozent aus Resten der Formel I

$$\begin{array}{l} -CH_2-CH- \\ \qquad\quad | \\ \qquad\quad Y-SO_3^{\ominus}X^{\oplus} \end{array} \qquad (I)$$

2 bis 40 Gew.% aus Resten der Formel II

$$\begin{array}{l} -CH_2-CH- \\ \qquad\quad | \\ \qquad\quad N-R^1 \\ \qquad\quad | \\ \qquad\quad CO-R^2 \end{array} \qquad (II) \qquad (II)$$

und 38 bis 93 Gew.% aus Resten der Formel III

$$\begin{array}{l} -CH_2-CH- \\ \qquad\quad | \\ \qquad\quad CO \\ \qquad\quad | \\ \qquad\quad NH_2 \end{array} \qquad (III) \qquad (III)$$

besteht, oder eines durch Partialhydrolyse dieses Copolymerisats erhältlichen Derivats, wobei $R^1$ und $R^2$ gleich oder verschieden sind und Wasserstoff, Methyl, Ethyl oder ggf. zusammen auch Trimethylen, Y den Rest $-CO-NH-C(CH_3)_2-CH_2-$ oder eine direkte Bindung und $X^{\oplus}$ ein Kation bedeuten und das sich überraschenderweise gegenüber den nächstvergleichbaren, aus der US-PS 2 775 557 und den DE-PS 13 00 481 und 24 44 108 bekannten Produkten insbesondere durch eine wesentlich höhere Elektrolyt- und Thermostabilität und damit eine erhöhte Viskositätsstabilität in Meerwasser und hochsalinen Formationswässern (Salzkonzentration bis 25 Gew.% NaCl) auch in Gegenwart mehrwertiger Ionen, insbesondere Erdalkaliionen, sowie durch eine ausgezeichnete Langzeittemperaturstabilität bis etwa 150°C auszeichnet und das daher den bekannten Produkten als Viskositätserhöher für das Entölen von Sand- und Gesteinsmassen beim chemischen Fluten von Erdöl-Lagerstätten erheblich überlegen ist.

Das Kation $X^{\oplus}$ kann sich prinzipiell von jeder wasserlöslichen bekannten Base ableiten, deren Stärke ausreicht, die Sulfogruppen der erfindungsgemäß einzusetzenden Copolymeren zu neutralisieren und die die Wasserlöslichkeit der Copolymeren nicht beeinträchtigt. Die Auswahl kann somit in einfacher bekannter Weise erfolgen.

Zweckmäßigerweise bedeutet jedoch $X^{\oplus}$ ein Alkalikation, insbesondere ein Natrium- oder Kaliumkation, oder ein Kation der Formel $H\overset{\oplus}{N}R^3_3$ , wobei die 3 Reste $R^3$ gleich oder verschieden sind und für Wasserstoff, Alkyl mit 1 - 4 C-Atomen oder Hydroxyethyl stehen.

Bevorzugt einzusetzende Copolymerisate bestehen in statistischer Verteilung zu 5 bis 50 Gewichtsprozent aus Resten der Formel I, 2 bis 20 Gewichtsprozent aus Resten der Formel II und zu 45 bis 90 Gewichtsprozent aus Resten der Formel III bzw. deren Hydrolyseprodukten.

Besonders bevorzugt einzusetzende Copolymerisate enthalten Reste der Formel I, in denen
Y den Rest $-CO-NH-C(CH_3)_2-CH_2-$ bedeutet und
Reste der Formel II mit $R^1 = R^2 = CH_3$. In den durch Partialhydrolyse der erfindungsgemäß einzusetzenden Copolymerisate erhältlichen Derivaten ist ein Anteil von bis zu 60 %, vorzugsweise 10 - 30 %, der ursprünglich vorhandenen Reste der Formel III durch Reste der

Formel IV

$$-CH_2-\underset{COO^{\ominus}X^{\oplus}}{\underset{|}{CH}}- \qquad (IV)$$

ersetzt, wobei $X^{\oplus}$ die obengenannten Bedeutungen hat. Zweckmäßigerweise wird im Rahmen dieses Bereichs der Hydrolysegrad umso höher gewählt, je geringer der Sulfonsäuregehalt im Copolymeren ist und umgekehrt.

Bevorzugte Partialhydrolysate enthalten insgesamt 20 bis 60 Gewichtsprozent von Gruppen der Formeln I und IV.

Bevorzugt sind auch solche Copolymerisate der angegebenen chemischen Zusammensetzung, die einen hohen Polymerisationsgrad besitzen,und die daher in wäßriger Lösung besonders hohe Viskositäten zeigen.

Die sehr gute viskositätserhöhende Wirkung der erfindungsgemäß einzusetzenden Copolymerisate und ihrer Partialhydrolysate in konzentrierten Salzlösungen und ihre Temperaturstabilität wird in vielen Fällen durch Anwesenheit von Borat-Anionen noch weiter erhöht. Diese vorteilhaften, Borat-Anionen enthaltenden Copolymerisate und deren Partialhydrolysate enthalten, berechnet als $H_3BO_3$, 2,5 bis 35 Gew.%, vorzugsweise 5 bis 25 Gew.%, Borat-Anionen bezogen auf das Gewicht der unverseiften Polymeren.

Besonders bevorzugt sind solche erfindungsgemäßen und erfindungsgemäß einzusetzenden Copolymerisate, die mehrere bevorzugte Merkmale aufweisen.

Nach den Angaben der Europäischen Patentschrift 44 508 ist es besonders vorteilhaft, die dort definierten Copolymerisate durch Polymerisation in wäßriger Lösung nach dem Verfahren der Gelpolymerisation, insbesondere unter Ausnutzung des Trommsdorf-Norrish-Effekts, herzustellen.

Die so hergestellten Copolymerisate haben in der Tat eine hervorragende Wirksamkeit. Sie liegen nach der angegebenen Herstellungsweise in Form von Gelpartikeln oder getrocknet als Pulver vor und müssen vor ihrem Einsatz an der Bohrstelle zunächst wieder in Wasser gelöst werden. Dieses Auflösen der pulverförmigen Polymerisate erfordert einen verhältnismäßig hohen zeitlichen und technischen Aufwand, da es nicht einfach ist, so hochmolekulare wasserlösliche Copolymerisatpulver ohne Klumpenbildung in Wasser aufzulösen.

Es bestand daher ein dringendes technisches Bedürfnis, eine anwendungsgünstigere Form der genannten Copolymerisate bereitzustellen.

Es wurde nun gefunden, daß sich wäßrige Lösungen der genannten Copolymerisate auf wesentlich einfachere Weise erhalten lassen, wenn die Herstellung der Copolymerisate nicht nach dem Verfahren der Gelpolymerisation sondern nach dem an sich bekannten Verfahren der inversen Emulsionspolymerisation durchgeführt wird.

Die vorliegende Erfindung betrifft somit die Herstellung wasserlöslicher Copolymerisate, die in statistischer Verteilung zu 5 bis 60 Gewichtsprozent aus Resten der Formel I

$$\begin{array}{l} -CH_2-CH- \\ \qquad\quad | \\ \qquad\quad Y-SO_3^{\ominus}X^{\oplus} \end{array} \qquad (I)$$

2 bis 40 Gew.% aus Resten der Formel II

$$\begin{array}{l} -CH_2-CH- \\ \qquad\quad | \\ \qquad\quad N-R^1 \\ \qquad\quad | \\ \qquad\quad CO-R^2 \end{array} \qquad (II)$$

und 38 bis 93 Gew.% aus Resten der Formel III

$$\begin{array}{l} -CH_2-CH- \\ \qquad\quad | \\ \qquad\quad CO \\ \qquad\quad | \\ \qquad\quad NH_2 \end{array} \qquad (III)$$

bestehen, sowie deren durch Partialhydrolyse erhältlicher Derivate, wobei $R^1$ und $R^2$ gleich oder verschieden sind und Wasserstoff, Methyl, Ethyl oder ggf. zusammen auch Trimethylen, Y den Rest $-CO-NH-C(CH_3)_2-CH_2-$ oder eine direkte

Bindung und $X^{\oplus}$ ein Kation bedeuten, nach der Methode der inversen Emulsionspolymerisation.

Bevorzugte erfindungsgemäße Copolymerisate werden erhalten, wenn zur Herstellung von je 100 Gewichtsteilen des Copolymerisats 5 - 50 Gewichtsteile 2-Acrylamido-2-methyl-propansulfonsäure der Formel Ib oder Vinylsulfonsäure der Formel Ic, 2 - 20 Gew.Teile des Vinylacylamids der Formel IIb und 45 - 90 Gew.Teile Acrylamid eingesetzt werden.

Besonders bevorzugt ist der Einsatz von Verbindungen der Formeln Ib und IIb mit $R^1 = R^2 = CH_3$ zusammen mit Acrylamid.

Das Prinzip der inversen Emulsionspolymerisation ist aus der U.S. Patentschrift 3 284 393 bekannt. Bei diesem Verfahren werden wasserlösliche Monomere oder Mischungen davon in der Wärme zu hochmolekularen Copolymerisaten polymerisiert, indem man zunächst die Monomeren oder wäßrige Lösungen davon, unter Zusatz von Wasser-in-Öl-Emulgatoren in einem mit Wasser nicht mischbaren, die zusammenhängende Phase bildenden organischen Lösungsmittel emulgiert und diese Emulsion in Gegenwart von radikalischen Initiatoren erwärmt. Unter diesen Bedingungen lassen sich auch die am Aufbau der aus der europäischen Patentschrift 44 508 bekannten Polymeren beteiligten Monomeren zu Polymerisatemulsionen umsetzen, bei denen das wasserunlösliche Lösungsmittel das Dispersionsmedium darstellt. Die einzusetzenden Comonomeren können als solche in dem mit Wasser nicht mischbaren organischen Lösungsmittel emulgiert werden, oder sie können in Form einer wäßrigen Lösung, die zwischen 100 und 5 Gewichtsprozent Comonomere und 0 bis 95 Gewichtsprozent Wasser enthält, eingesetzt werden, wobei die Zusammensetzung der wäßrigen Lösung eine Frage der Löslichkeit der Comonomeren in Wasser und der vorgesehenen Polymerisationstemperatur ist. Das Verhältnis der Monomerenphase oder der wäßrigen Lösung der Monomeren zur Ölphase ist in weiten Grenzen variabel und liegt in der Regel bei 70 : 30 bis 30 : 70.

Um die Monomerenphase in dem mit Wasser nicht mischbaren organischen Lösungsmittel zu einer Wasser-in-Öl-Emulsion zu emulgieren, werden den Gemischen 0,1 bis 10 Gewichtsprozent, bezogen auf die Ölphase eines Wasser-in-Öl-Emulgators, zugesetzt. Vorzugsweise werden solche Emulgatoren verwendet, die einen relativ niedrigen HLB-Wert aufweisen, wie beispielsweise Natrium-Hexadecylphthalat, Sorbitanmonooleat, Sorbitanmonostearat, Natrium-cetyl- oder -stearylphthalat, Metallseifen- oder Glycerinester, deren Säurekomponenten sich von Carbonsäuren mit 14 - 20 Kohlenstoffatomen ableiten. Als Ölphase kann im Prinzip jede inerte wasserunlösliche Flüssigkeit, d.h. im Prinzip jedes hydrophobe organische Lösungsmittel, eingesetzt werden. Im allgemeinen verwendet man im Rahmen der vorliegenden Erfindung Kohlenwasserstoffe, deren Siedepunkt im Bereich von 120 bis 350°C liegt. Diese Kohlenwasserstoffe können gesättigte, lineare oder verzweigte Paraffin-Kohlenwasserstoffe, wie sie in Erdölfraktionen vorwiegend vorliegen, sein, wobei diese auch die üblichen Anteile von Naphthenkohlenwasserstoffen enthalten können. Es können aber auch aromatische Kohlenwasserstoffe, wie beispielsweise Toluol oder Xylol, sowie die Gemische der oben genannten Kohlenwasserstoffe als Ölphase eingesetzt werden. Vorzugsweise verwendet man ein Gemisch aus gesättigten Normal- und Iso-Paraffinkohlenwasserstoffen, das bis zu 20 Gewichtsprozent Naphthene enthält.

Die Polymerisation kann bei Temperaturen zwischen 30 und 90°C, vorzugsweise 40 und 70°C, durchgeführt werden.

Zur Auslösung der Polymerisation können energiereiche elektromagnetische Strahlen oder die üblichen chemischen Polymerisationsinitiatoren herangezogen werden, z.B. organische Peroxide, wie Benzoylperoxid, tert. Butylhydroperoxid, Methyl-ethyl-keton-peroxid, Cumol-hydroperoxid, Azoverbindungen wie Azo-di-iso-butyro-nitril sowie anorganische Peroxiverbindungen wie $(NH_4)_2S_2O_8$ oder $K_2S_2O_8$ oder $H_2O_2$ gegebenenfalls in Kombination mit Reduktionsmitteln wie Natriumhydrogensulfit, und Eisen-II-Sulfat oder Redoxsysteme, welche als reduzierende Komponente eine aliphatische oder aromatische Sulfinsäure, wie Benzolsulfinsäure und Toluolsulfinsäure oder Derivate dieser Säuren, enthalten, wie z.B. Mannichaddukte aus Sulfinsäure, Aldehyden und Aminoverbindungen, wie sie in der Deutschen Patentschrift 13 01 566 beschrieben sind. Pro 100 g Gesamtmonomeren werden in der Regel 0,03 bis 2 g des Polymerisationsinitiators eingesetzt.

Durch mehrstündiges Nachheizen der Polymerisatemulsionen, im Temperaturbereich von 50-130$^{o}$C, vorzugsweise 70-100$^{o}$C, können die Qualitätseigenschaften der Polymerisate noch verbessert werden.

Die erfindungsgemäßen Copolymerisate sind ggf. noch partiell verseift. Als Verseifungsmittel kann prinzipiell jede wasserlösliche Base eingesetzt werden, deren Stärke für eine Reaktion mit den hydrolysierbaren Gruppen ausreicht. Bevorzugt werden jedoch NaOH, KOH, $NH_3$ oder neutrale oder saure Alkali- (insbesondere Natrium- und Kalium-) und Ammoniumsalze der Kohlensäure, Borsäure und Phosphorsäure. Das Verseifungsmittel wird entweder schon der Monomerenlösung zugesetzt oder mit dem Polymerisat vermischt. Die Verseifung erfolgt daher - je nach Verfahrensweise - bereits während der normalerweise exotherm verlaufenden Polymerisation oder durch weitere Wärmezufuhr im Anschluß an die Polymerisation. Auch eine Kombination beider Verfahrensweisen ist möglich.

Die in vielen Fällen vorteilhaften, Borat-Anionen enthaltenden Produkte können auf einfache Weise erhalten werden, indem Natrium- oder Kaliumsalze der Borsäure (Ortho-, Meta- oder Polyborate bzw. Borsäure zusammen mit NaOH oder KOH) als Verseifungsmittel eingesetzt werden.

Besonders vorteilhafte erfindungsgemäße Polymerisatemulsionen werden dann erhalten, wenn man der Emulsion vor, während oder nach der Polymerisationsreaktion hydrophile Tenside zusetzt, wie sie beispielsweise aus der U.S. Patentschrift 3 624 019 bekannt sind. Hydrophile Tenside, die für diesen Einsatzzweck geeignet sind, sind beispielsweise Oxethylierungsprodukte hydroxylgruppenhaltiger organischer Verbindungen, wie z.B. ethoxyliertes Nonylphenol, ethoxyliertes Nonylphenolformaldehydharz, Dioctylester von Natriumsulfosuccinat oder Octylphenolpolyethoxyethanol. Außer nichtionischen Verbindungen können auch anionische und kationische Tenside eingesetzt werden.

Die erfindungsgemäß hergestellten tensidfreien Copolymerisatemulsionen werden in der Weise im Ölfeld eingesetzt, daß man sie einfach in die gewünschte Menge des Flutwassers, dem zuvor bekannte nichtionische, anionische oder kationische Tenside zugesetzt wurden, einrührt. Hierbei invertiert die Emulsion in sehr kurzer Zeit, und das Copolymerisat löst sich im Flutwasser auf.

Bei Einsatz von tensidhaltigen erfindungsgemäßen Copolymerisatemulsionen ist es nicht erforderlich, dem Flutwasser Tenside zuzusetzen. Diese Polymeremulsionen können ohne weiteres durch Einrühren in Wasser invertiert werden, so daß hier ein besonders einfaches und schnelles Arbeiten möglich ist. Die folgenden Ausführungsbeispiele veranschaulichen die Herstellung erfindungsgemäßer Copolymerisatemulsionen. In den Beispielen und der anschließenden Tabelle sind die folgenden Abkürzungen verwendet worden:

| | | |
|---|---|---|
| AM | : | Acrylamid |
| VIMA | : | N-Vinyl-N-methyl-acetamid |
| VIPY | : | N-Vinylpyrrolidon |
| AIBS | : | 2-Acrylamido-2-methyl-propansulfonsäure |
| VA | : | Vinylacetamid |
| VF | : | Vinylformamid |
| VSS-Na | : | Natriumvinylsulfonat |

Zur Neutralisation der Ansätze wurden folgende Basen verwendet:

| | | |
|---|---|---|
| A | : | NaOH |
| B | : | K OH |
| C | : | $NH_3$ |
| D | : | Dimethyl-ß-hydroxyethylamin |

In der Spalte "Katalysatoren" bedeuten:

| | | |
|---|---|---|
| APS | : | Ammoniumperoxidisulfat |
| DBA | : | Dibutylammoniumchlorid |

Beispiel 1:

In einem mit Rührer, Thermometer und einem Stickstoffein- und -auslaß versehenen Reaktionsgefäß mischt man folgende Komponenten:
89 Teile eines Kohlenwasserstofflösungsmittels isoparaffinischer Struktur, (Siedepunktbereich: 204 - 247) und 3,5 Teile Sorbitanmonostearat. Nachdem man die Komponenten gut durchmischt hat, setzt man eine Lösung von 39,7 Teilen Acrylamid, 6,4 Teilen Acrylamidopropylmethylsulfonsäure, 9,2 Teilen N-Vinylpyrrolidon, 15,6 Teilen N-Vinylmethylacetamid in 94 Teilen Wasser zu und emulgiert die wäßrige Phase in dem Kohlenwasserstofföl. Man leitet 30 Minuten lang Stickstoff über die Mischung und erhitzt sie dann innerhalb von 15 Minuten auf eine Temperatur von 60°C. Bei dieser Temperatur setzt man

eine Lösung von 0,09 Teilen 2,2'-Azobis(2-aminopropan)-hydrochlorid in 2 Teilen Wasser zu. Nachdem man die Mischung 3 Stunden auf 60°C erhitzt hat, ist die Polymerisation beendet. Man erhält eine koagulatfreie, gegen Sedimentation stabile Dispersion. Das so erhaltene Polymer hat einen K-Wert von 372.

Beispiel 2:

In einem mit Rührer, Thermometer und einem Stickstoffein- und -auslaß versehenen Reaktionsgefäß mischt man folgende Komponenten:

76 Teile eines Kohlenwasserstofföls isoparaffinischer Struktur (Siedebereich: 200 - 250°C), 6 Teile Sorbitanmonostearat, 3 Teile Sorbitantrioleat (polyoxiethyliert). Nachdem man die Komponenten gut durchmischt hat, setzt man eine Lösung von 39,7 Teilen Acrylamid, 6,4 Teilen Acrylamidopropylmethylsulfonsäure,9,2 Teilen N-Vinylpyrrolidon, 15,6 Teilen N-Vinylformamid in 94 Teilen Wasser zu und emulgiert die wäßrige Phase in dem Kohlenwasserstofföl. Man leitet 30 Minuten lang Stickstoff über die Mischung und erhitzt sie dann innerhalb von 15 Minuten auf eine Temperatur von 60°C. Bei dieser Temperatur setzt man eine Lösung von 0,9 Teilen 2,2'-Azobis(2-amidinopropan)hydrochlorid in 2 Teilen Wasser zu. Nach 30 Minuten setzt die leicht exotherme Reaktion ein. Die Temperatur steigt auf etwa 90°C. Sobald die Temperatur wieder fällt, ist die Polymerisation beendet. Man erhält eine koagulatfreie, gegen Sedimentation stabile Dispersion. Das so erhaltene Polymer hat einen K-Wert von 394.

| Nr. | Monomerenzusammensetzung /%/ AM | VIMA | AIBS | VSS-Na | VIPY | Weitere Zusätze (auf Ges.-Mon.) | Base | Katalys. | η A /mPas/ | η B /mPas/ |
|---|---|---|---|---|---|---|---|---|---|---|
| 3 | 70 | 10 | 20 | | | 6,1% $H_3BO_3$ | A | APS/DBA | 13,9 | 5,8 |
| 4 | 93 | | 5 | | 2 | 24,8% $K_2CO_3$ | B | APS/DBA | 56,4 | 16,1 |
| 5 | 85 | 5 | 10 | | | 22,7% $K_2CO_3$ | B | APS/DBA | 55,6 | 15,2 |
| 6 | 90 | 5 | 5 | | | 18,0% $Na_2CO_3$ | A | APS/DBA | 45,5 | 14,4 |
| 7 | 83 | 7 | 10 | | | 16,6% $Na_2CO_3$ | A | APS/DBA | 38,5 | 14,9 |
| 8 | 83 | 7 | 10 | | | 19,8% $H_3BO_3$ | A | APS | 50,7 | 12,7 |
| 9 | 85 | | 10 | | 5 | 22,7% $K_2CO_3$ | B | APS/DBA | 34,4 | 13,0 |
| 10 | 80 | 5 | 15 | | | 19% $H_3BO_3$ | A | APS | 51,5 | 11,9 |
| 11 | 65 | 5[1)] | 30 | | | 2,8% $H_3BO_3$ | B | APS | 25,7 | 9,2 |
| 12 | 60 | 5 | 35 | | | 5,2% $H_3BO_3$ | A | APS | 28,8 | 8,0 |
| 13 | 80 | 5[2)] | 15 | | | 19,1% $Na_2CO_3$ | A | APS/DBA | 45,0 | 12,6 |
| 14 | 85 | 5[2)] | 10 | | | 20,3% $H_3BO_3$ | A | APS | 31,5 | 10,0 |
| 15 | 85 | | | 10 | 5 | 20,4% $H_3BO_3$ | A | APS/DBA | 51,0 | 13,2 |
| 16 | 38 | 2 | 60 | | | | A | APS | 20,0 | 7,7 |
| 17 | 78 | 7 | 15 | | | 20,8% $Na_2CO_3$ | A | APS | 33,9 | 11,1 |
| 18 | 83 | 2 | 15 | | | 22,2% $Na_2CO_3$ | A | APS | 31,0 | 9,9 |
| 19 | 65 | | 30 | | 5 | 8,5% $H_3BO_3$ | A | APS | 40,5 | 11,6 |

| Nr. | Monomerenzusammensetzung [%] AM | VIMA | AIBS | VSS-Na | VIPY | Weitere Zusätze (auf Ges.-Mon.) | Base | Katalys. | η A [mPas] | η B [mPas] |
|---|---|---|---|---|---|---|---|---|---|---|
| 20 | 90 | 5[1)] | 5 | | | 27,5% $H_3BO_3$ | A | APS/DBA | 51,9 | 13,4 |
| 21 | 72 | 8 | 20 | | | 12,6% $H_3BO_3$ | A | APS | 37,8 | 10,2 |
| 22 | 40 | 10 | 50 | | | | A | APS/DBA | 14,8 | 3,3 |
| 23 | 60 | 5 | 35 | | | 2,6% $H_3BO_3$ | A | APS | 16,4 | 6,4 |
| 24 | 55 | 5 | 40 | | | | A | APS/DBA | 17,8 | 5,0 |
| 25 | 50 | 10 | 40 | | | | A | APS/DBA | 18,3 | 6,9 |
| 26 | 45 | 15 | 40 | | | | A | APS/DBA | 18,8 | 2,4 |
| 27 | 60 | 10 | 30 | | | 5,2% $H_3BO_3$ | A | APS | 13,4 | 4,6 |
| 28 | 75 | | 20 | | 5 | 3,3% $H_3BO_3$ | A | APS | 25,0 | 10,0 |
| 29 | 65 | 5 | 30 | | | | C | APS/DBA | 18,3 | 9,3 |
| 30 | 75 | | 18 | | 7 | 6,5% $H_3BO_3$ | A | APS | 31,2 | 11,1 |
| 31 | 75 | 7[2)] | 18 | | | 9,8% $H_3BO_3$ | A | APS | 22,2 | 11,0 |
| 32 | 70 | 10 | 20 | | | 6,1% $H_3BO_3$ | B | APS | 13,6 | 7,3 |
| 33 | 83 | 7 | | 10 | | 21,8% $H_3BO_3$ | B | APS | 29,3 | 9,8 |
| 34 | 80 | 10 | 10 | | | 14% $H_3BO_3$ | A | APS | 20,2 | 7,4 |
| 35 | 68 | 2 | 30 | | | 5,9% $H_3BO_3$ | A | APS | 26,0 | 10,9 |
| 36 | 70 | 10 | 20 | | | 16,3% $H_3BO_3$ | A | APS | 15,1 | 5,2 |

| Nr. | Monomerenzusammensetzung [%] AM | VIMA | AIBS | VSS-Na | VIPY | Weitere Zusätze (auf Ges.-Mon.) | Base | Katalys. | $\eta$ A [mPas] | $\eta$ B [mPas] |
|---|---|---|---|---|---|---|---|---|---|---|
| 37 | 70 | 5 | 25 | | | 15,3% $H_3BO_3$ | B | APS | 20,2 | 12,2 |
| 38 | 83 | 2 | 15 | | | 19,9% $H_3BO_3$ | A | APS | 37,6 | 11,9 |
| 39 | 78 | 2 | 20 | | | 18,6% $H_3BO_3$ | A | APS | 29,5 | 11,0 |
| 40 | 73 | 2 | 25 | | | 6,4% $H_3BO_3$ | A | APS | 31,3 | 12,0 |
| 41 | 70 | | 25 | | 5 | 12,2% $H_3BO_3$ | B | APS | 44,8 | 15,0 |
| 42 | 40 | 5 | 55 | | | | A | APS/DBA | 20,5 | 6,0 |
| 43 | 50 | 5 | 45 | | | | B | APS/DBA | 20,6 | 11,2 |
| 44 | 68 | 2 | 30 | | | | C | APS/DBA | 13,4 | 8,9 |
| 45 | 73 | 2 | 25 | | | | D | APS/DBA | 10,7 | 7,6 |
| 46 | 70 | 10 | 20 | | | 22,2% $NaHCO_3$ | A | APS | 10,2 | 4,8 |
| 47 | 80 | 5 | | 15 | | 19,3% $H_3BO_3$ | B | APS | 16,2 | 7,5 |
| 48 | 93 | 2 | 5 | | | 22,4% $H_3BO_3$ | A | APS | 81,0 | 11,5 |
| 49 | 85 | 5 | 10 | | | 17% $Na_2CO_3$ | A | APS | 46,2 | 10,3 |
| 50 | 88 | 2 | 10 | | | 21,1% $H_3BO_3$ | A | APS | 52,5 | 11,0 |
| 51 | 85 | 5[1)] | 10 | | | 11,1% $H_3BO_3$ | B | APS | 50,4 | 9,8 |
| 52 | 80 | 3 | 17 | | | 3,5% $H_3BO_3$ | A | APS | 36,3 | 12,0 |
| 53 | 70 | 5[2)] | 25 | | | | A | APS/DBA | 71,0 | 25,0 |

| Nr. | Monomerenzusammensetzung [%] AM | VIMA | AIBS | VSS-Na | VIPY | Weitere Zusätze (auf Ges.-Mon.) | Base | Katalys. | η A [mPas] | η B [mPas] |
|---|---|---|---|---|---|---|---|---|---|---|
| 54 | 57 | 3 | 40 | | | | B | APS/DBA | 22,3 | 10,0 |
| 55 | 75 | 5 | 20 | | | 17,9% $H_3BO_3$ | A | APS | 25,3 | 8,5 |
| 56 | 80 | | 15 | | 5 | 7% $H_3BO_3$ | A | APS | 42,4 | 9,5 |
| 57 | 70 | | 15 | | 15 | 16,7% $H_3BO_3$ | A | APS | 31,7 | 8,8 |
| 58 | 80 | | 15 | | 5 | 15% $H_3BO_3$ | A | APS | 26,0 | 10,4 |
| 59 | 65 | 5 | | 30 | | 2,8% $H_3BO_3$ | A | APS | 3,6 | 3,8 |
| 60 | 60 | 10 | | 30 | | 5,2% $H_3BO_3$ | A | APS | 2,8 | 2,9 |
| 61 | 70 | 5 | 25 | | | | D | APS | 3,0 | 3,0 |
| 62 | 75 | 5 2) | 20 | | | | B | APS | 15,3 | 13,2 |
| 63 | 70 | 5 | 25 | | | | C | APS | 8,5 | 6,9 |
| 64 | 73 | 2 | | 25 | | | / | APS | 3,0 | 4,1 |
| 65 | 80 | 2 | 15 | | 3 | 21,4% $K_2CO_3$ | B | APS/DBA | 39,1 | 17,3 |
| 66 | 38 | 2 | 55 | 5 | | | A | APS/DBA | 37,0 | 15,2 |
| 67 | 80 | 3 | 10 | 5 | 2 | 18,0% $Na_2CO_3$ | A | APS | 41,3 | 14,7 |
| 68 | 70 | 5 | 20 | 5 | | 3,3% $H_3BO_3$ | B | APS | 62,2 | 15,3 |

1) VF

2) VA

Anwendungstest: S c h e r s t a b i l i t ä t

Bei der Ausprüfung auf Eignung der erfindungsgemäßen Copolymerisate für den Einsatz bei der Erdöltertiärförderung ist die Scherstabilität neben einer rückstandsfreien Löslichkeit ein wichtiges Vorauswahlkriterium.

Zur Prüfung der Scherstabilität werden zunächst 500 ppm Copolymerisat (Einsatzmenge auf Wirkstoffgehalt bezogen) in Süßwasser von 3,5° deutscher Härte, entsprechend 35 mg CaO/Liter gelöst. Anschließend erfolgt bei Raumtemperatur eine erste Viskositätsmessung (A). Die Lösung wird danach eine bestimmte Zeit lang einer Scherung mit einem schnelllaufenden Rührer unterworfen und eine erneute Viskositätsmessung ($A_1$) vorgenommen. Der Quotient beider Viskositätswerte

$$\text{Faktor}_{(\text{Scherung})} = {A_1}/{A}$$

ist ein Maß für die Scherbelastbarkeit des Flutmediums bei den angegebenen Versuchsbedingungen. Für eine Auswahl der Copolymerisate sind die ermittelten Faktoren in der folgenden Tabelle zusammengestellt:

| Copolymerisat | Faktor (Scherung) |
|---|---|
| Tabelle Nr. 37 | 0,68 |
| Tabelle Nr. 41 | 0,64 |
| Tabelle Nr. 43 | 0,73 |
| Tabelle Nr. 47 | 0,63 |
| Tabelle Nr. 54 | 0,72 |

Die Werte für die übrigen erfindungsgemäßen Copolymerisate liegen in der gleichen Größenordnung. Handelsübliche Copolymerisate aus Acrylamid und Acrylsäure ergeben unter gleichen Versuchsbedingungen Werte für den Faktor (Scherung) von 0,55 bis 0,40 und niedriger. Die Viskositätsmessung erfolgt in einem Brookfield Viskosimeter.

Anwendungstest: I n j e k t i v i t ä t

Für das Einpressen des Flutmediums durch die Injektionssonde in die Lagerstätte und für einen einwandfreien Flutvorgang innerhalb der Formation ist eine feststofffreie,

quellkörperfreie Lösung erforderlich.

Zur Bestimmung der Injektivität von Lösungen der erfindungsgemäßen Copolymerisate werden sandgepackte Glasrohre bei Raumtemperatur mit einem bestimmten konstanten Volumenstrom für einen Zeitraum von 24 h geflutet; dabei wird der Druck des Flutmediums vor dem Eintritt in das Flutrohr nach Ablauf von 1 h ($P_1$) und von 24 h ($P_2$) ermittelt. Der Quotient

$$\text{Faktor}_{(\text{Injektivität})} = P_2 / P_1$$

ist ein Maß für Injizierbarkeit des Flutmediums bei den vorgegebenen Bedingungen. Für diese Teste werden Lösungen von 1000 ppm Copolymerisat in Salzwasser, bestehend aus 130 g NaCl und 10 g $CaCl_2$ pro Liter, verwendet. Für eine Auswahl der Copolymerisate sind die ermittelten Faktoren in der folgenden Tabelle aufgeführt:

| Copolymerisat | Faktor(Injektivität) |
|---|---|
| Beispiel Nr. 1 | 1,12 |
| Beispiel Nr. 2 | 1,10 |
| Tabelle Nr. 37 | 1,07 |
| Tabelle Nr. 41 | 1,09 |
| Tabelle Nr. 43 | 1,05 |
| Tabelle Nr. 47 | 1,00 |
| Tabelle Nr. 54 | 1,04 |

Lösungen mit hohem Gelkörperanteil, die mit handelsüblichen Polymerisaten aus Acrylamid/Acrylat bisweilen auftreten, zeigen Werte von 1,9 und mehr und führen schließlich zur Verstopfung der Sandpackung.

Anwendungstest: V i s k o s i t ä t

Entscheidendes Kriterium für die Wirtschaftlichkeit eines Flutmittelzusatzes für Polymerflutverfahren ist seine Viskositätsergiebigkeit im vorgegebenen, oftmals salinen Lagerstätten- und Flutwassermedium bei der jeweiligen Lagerstättentemperatur. Bei einem Einsatz von acrylamidhaltigen Polymerisaten ist deren Viskositätsverhalten von der Gegenwart von zweiwertigen Kationen, wie Calcium- und Magnesiumionen, mitbestimmt.

Folgende Viskositätswerte werden im Brookfield-Viskosimeter bei einem Schergefälle von D = 7,3 $s^{-1}$ bei 85°C für wäßrige, 2000 ppm Copolymerisat enthaltende Salzlösungen (130 g NaCl und 10 g $CaCl_2$ pro Liter) ermittelt:

| Copolymerisat | Viskosität (mPa.s) |
|---|---|
| Beispiel Nr. 1 | 6,3 |
| Beispiel Nr. 2 | 7,7 |
| Tabelle Nr. 37 | 5,4 |
| Tabelle Nr. 41 | 6,0 |
| Tabelle Nr. 43 | 5,3 |
| Tabelle Nr. 47 | 3,3 |
| Tabelle Nr. 54 | 4,9 |

Handelsübliche Copolymerisate zeigen unter gleichen Bedingungen wesentlich niedrigere Werte.

Anwendungstest T h e r m o s t a b i l i t ä t

Ein weiteres wichtiges Kriterium für die Beurteilung von Polymerisaten für die Tertiärförderung ist die Langzeitbeständigkeit der Lösungen unter thermischer Belastung. Die Flutmedien sollten dabei weder wesentlich in ihrer Viskosität abnehmen, noch zu Ausflockungen neigen. 2000 ppm Copolymerisat, 130 g NaCl und 10 g $CaCl_2$ pro Liter enthaltende wäßrige Lösungen werden zur Prüfung der Thermostabilität bei erhöhter Temperatur gelagert. In regelmässigen Zeitabständen werden Proben entnommen, auf Raumtemperatur abgekühlt, und anschließend wird die Viskosität gemessen. Die gemessenen Viskositätswerte werden prozentual auf die Werte, die vor Beginn der Lagerung erhalten wurden, bezogen. 100 % bedeuten demnach eine vollständige Erhaltung der Viskosität.

Die erfindungsgemäßen Copolymerisate zeigen in Form ihrer wäßrigen salinen Lösungen gute bis sehr gute Stabilitäten, wie aus der nachfolgenden Tabelle hervorgeht.

| Copolymerisat | Viskositätserhaltung nach 10 Tagen | nach 30 Tagen Lagerung |
|---|---|---|
| Beispiel Nr. 1 | 97 % | 95 % |
| Beispiel Nr. 2 | 100 % | 99 % |

(Fortsetzung Tabelle Viskositätserhaltung)

| Copolymerisat | Viskositätserhaltung nach 10 Tagen | nach 30 Tagen Lagerung |
|---|---|---|
| Tabelle Nr. 37 | 100 % | 96 % |
| Tabelle Nr. 41 | 96 % | 90 % |
| Tabelle Nr. 43 | 100 % | 99 % |
| Tabelle Nr. 47 | 100 % | 98 % |
| Tabelle Nr. 54 | 100 % | 100 % |

Die Lösungen bleiben klar und durchsichtig mit Ausnahme von Lösung mit Copolymerisat Nr. 41, die eine schwache Trübung aufweist. Handelsübliche Copolymerisate zeigen bei gleichen Versuchsbedingungen wesentlich stärkere Abnahmen in den Viskositätswerten und neigen zu Ausfällungen wasserunlöslicher Niederschläge.

Anwendungstest: Mobilitätsverhalten

Die eintretende Mehrentölung beim Fluten von ölhaltigen porösen Gesteins- oder Sandschichten unter Einsatz von wasserlöslichen Polymeren wird durch Laborflutversuche nachgewiesen. Die bei diesen Anwendungstesten durchgeführten Flutungen erfolgen in sandgepackten Flutrohren, die mit entgastem Lagerstättenöl, sog. Totöl, gefüllt sind. Die Apparatur für Flutversuche besteht im wesentlichen aus Vorratsbehältern für verschiedene Flutmedien, einem automatischen Druckschreiber, einer Förderpumpe für die Förderung des Flutmediums, Flutrohr sowie einem automatischen Fraktionssammler zum Auffangen der Eluate.
Bei dem Flutrohr handelt es sich um ein Glasrohr bestimmter Dimension, das mit Sand definierter Korngrößenverteilung beschickt ist und mit dem Totöl gesättigt wird. Mit der Förderpumpe werden aus den Vorratsbehältern bei konstantem Volumenstrom die ausgewählten Flutmedien in die temperierte, ölgesättigte Sandpackung transportiert. In einem jeweils parallellaufenden Blindversuch wird ausschließlich mit synthetischem Formationswasser geflutet. In dem nachgeschalteten Fraktionssammler werden die Eluate nach dem Durchfließen der Sandpackung getrennt aufgefangen und volumetrisch bestimmt. Der Vergleich der erhaltenen Ölmengen im Fraktionssammler aus den Flutversuchen mit verschiedenen erfindungsgemäßen Copolymerisaten als flutmittelzusatz mit denjenigen ohne Polymerzusatz belegt die eintretende erwünschte Mehrentölung bei Einsatz der erfindungsgemäßen Verbindungen.
Ohne Einsatz von wasserlöslichen polymeren Zusatzmitteln lag die Entölung der Sandpackung bei durchschnittlich 55 bis 60 %; beim Einsatz von 2000 ppm Copolymerisat in Salzwasser, 130 g NaCl und 10 g $CaCl_2$ pro Liter enthaltend; bei 85°C liegen die Werte für die Gesamtentölung bei ca. 89 bis 93 % (für Copolymerisate Tabelle Nr. 43 und 54) bzw. bei 93 bis 96 % (für Copolymerisate Beispiel Nr. 1, 2 und Tabelle Nr. 41). Die Wirksamkeit und Eignung der erfindungsgemäßen Copolymerisate für den Einsatz beim Erdöltertiärfluten sind damit gegeben.

## Patentansprüche

1. Verfahren zur Herstellung wasserlöslicher Copolymerisate, die in statistischer Verteilung zu 5 bis 60 Gewichtsprozent aus Resten der Formel I

$$-CH_2-CH(-Y-SO_3^{\ominus}X^{\oplus})- \qquad (I)$$

2 bis 40 Gew.% aus Resten der Formel II

$$-CH_2-CH(-N(-R^1)-CO-R^2)- \qquad (II)$$

und 38 bis 93 Gew.% aus Resten der Formel III

$$-CH_2-CH(-CO-NH_2)- \qquad (III)$$

bestehen, sowie deren durch Partialhydrolyse erhältliche Derivate, wobei $R^1$ und $R^2$ gleich oder verschieden sind und Wasserstoff, Methyl, Ethyl oder ggf. zusammen auch Trimethylen, Y den Rest $-CO-NH-C(CH_3)_2-CH_2-$ oder eine direkte Bindung und $X^{\oplus}$ ein Kation bedeuten,

dadurch gekennzeichnet, daß man eine Monomerenmischung, die zu 5 bis 60 Gew.% aus Verbindungen der Formel Ia

$$CH_2=CH-Y-SO_3^{\ominus}X^{\oplus} \qquad (Ia),$$

zu 2 bis 40 Gew.% aus Verbindungen der Formel IIa

$$CH_2=CH-N(-R^1)-CO-R^2 \qquad (IIa)$$

und zu 38 bis 93 Gew.% aus Verbindungen der Formel IIIa

$$CH_2=CH-CO-NH_2 \qquad (IIIa)$$

besteht, oder eine wäßrige Lösung dieser Monomerenmischung mit einem Gesamt-Monomerengehalt von 5 bis 95 Gew.% in Gegenwart bekannter Wasser-inÖl-Emulgatoren in einem inerten, mit Wasser nicht mischbaren organischen Lösungsmittel emulgiert, unter Radikalbildungsbedingungen in an sich bekannter Weise polymerisiert und gegebenenfalls während oder im Anschluß an die Polymerisation eine Teilhydrolyse durchführt.

2. Verfahren gemäß Anspruch 1, dadurch gekennzeichnet, daß eine Monomerenmischung eingesetzt wird, die zu 5 bis 50 Gew.% aus Verbindungen der Formel Ia, 2 bis 20 Gew.% aus Verbindungen der Formel IIa und zu 45 bis 90 Gew.% aus Verbindungen der Formel IIIa bestehen.

3. Verfahren gemäß den Ansprüchen 1 und 2, dadurch gekennzeichnet, daß durch Partialhydrolyse ein Anteil von bis zu 60 % der ursprünglich vorhandenen Verbindungen bzw. Reste der Formel IIIa bzw. III durch Acrylsäure bzw. durch Reste der Formel IV

$$\begin{array}{l} -CH_2-CH- \\ \qquad\quad | \\ \qquad\ COO^{\ominus}\,X^{\oplus} \end{array} \qquad (IV)$$

ersetzt ist.

4. Verfahren gemäß Anspruch 3, dadurch gekennzeichnet, daß soviel Reste bzw. Verbindungen der Formel III bzw. IIIa hydrolysiert werden, daß die Copolymerisate insgesamt 20 bis 60 Gew.% von Gruppen der Formeln I und IV enthalten.

5. Verfahren gemäß den Ansprüchen 1 bis 4, dadurch gekennzeichnet, daß der wäßrigen Phase zusätzlich Borat-Anionen in einer Menge von 2,5 bis 35 Gew.%, bezeichnet als $H_3BO_3$ und bezogen auf das Gewicht des Copolymerisats, zugesetzt werden.

6. Mittel zur Entölung von mineralölhaltigen Sand- oder Gesteinsmassen bestehend aus einer Emulsion eines wasserlöslichen Copolymerisats oder einer 5 - 95 gewichtsprozentigen wäßrigen Lösung eines Copolymerisats, das in statistischer Verteilung zu 5 bis 60 Gew.% aus Resten der Formel I

$-CH_2-CH-$
$\quad Y-SO_3^{\ominus}X^{\oplus}$ (I)

2 bis 40 Gew.% aus Resten der Formel II

$-CH_2-CH-$
$\quad N-R^1$ (II)
$\quad CO-R^2$

und 38 bis 93 Gew.% aus Resten der Formel III

$-CH_2-CH-$
$\quad CO$ (III)
$\quad NH_2$

besteht, sowie dessen durch Partialhydrolyse erhältliche Derivate, wobei $R^1$ und $R^2$ gleich oder verschieden sind und Wasserstoff, Methyl, Ethyl oder ggf. zusammen auch Trimethylen, Y den Rest $-CO-NH-C(CH_3)_2-CH_2-$ oder eine direkte Bindung und $X^{\oplus}$ ein Kation bedeuten,

in einem mit Wasser nicht mischbaren organischen Lösungsmittel.

7. Verwendung der Emulsion eines wasserlöslichen Copolymerisats oder dessen 5 - 95 gewichtsprozentiger wäßrigen Lösung, das in statistischer Verteilung zu 5 bis 60 Gew.% aus Resten der Formel I

$-CH_2-CH-$
$\quad Y-SO_3^{\ominus}X^{\oplus}$ (I)

2 bis 40 Gew.% aus Resten der Formel II

$-CH_2-CH-$
$\quad N-R^1$ (II)
$\quad CO-R^2$

und 38 bis 93 Gew.% aus Resten der Formel III

$$\begin{array}{l} -CH_2-CH- \\ \qquad\;\; | \\ \qquad\; CO \\ \qquad\;\; | \\ \qquad\; NH_2 \end{array} \qquad\qquad \text{(III)}$$

besteht, oder dessen durch Partialhydrolyse erhältliche Derivate, wobei $R^1$ und $R^2$ gleich oder verschieden sind und Wasserstoff, Methyl, Ethyl oder ggf. zusammen auch Trimethylen, Y den Rest $-CO-NH-C(CH_3)_2-CH_2-$ oder eine direkte Bindung und $X^{\oplus}$ ein Kation bedeuten, in einem mit Wasser nicht mischbaren organischen Lösungsmittel zur Bereitung eines Flutwassers zum Entölen von mineralölhaltigen Sand- und Gesteinsmassen.